# FASCICULE DE BREVET EUROPEEN

(11) **EP 1 031 262 B1**
(45) Date de publication et mention de la délivrance du brevet: **27.04.2005**
(21) Numéro de dépôt: 00440038.8
(22) Date de dépôt: 08.02.2000
(51) Int. Cl.: A01B 33/06

(54) **Perfectionnement pour herse rotative**
Verbesserung an Kreiseleggen
Rotary harrow improvement

(30) Priorité: 23.02.1999 FR 9902479
(43) Date de publication de la demande: 30.08.2000
(73) Titulaire: KUHN S.A., 67706 Saverne Cedex (FR)
(72) Inventeur: Oberle, Edmond, 67700 Haegen (FR)

(56) Documents cités:
- DE-A- 1 757 038
- DE-U- 9 405 585
- FR-A- 2 274 207
- GB-A- 1 018 252
- US-A- 4 323 125
- US-A- 4 922 699

## Description

La présente invention se rapporte au domaine technique général des machines agricoles de travail du sol présentant des organes de travail animés.

L'invention concerne plus particulièrement une herse rotative dont le châssis est réalisé en deux ou plusieurs parties sensiblement alignées dans une direction transversale à la direction d'avance. Ces différentes parties du châssis peuvent être solidarisées à un cadre unique et rigide. Il est également possible, sans sortir du cadre de la présente invention, de permettre à chaque partie du châssis de se déplacer par rapport aux autres parties (ou à l'autre partie) du châssis, et ce pour améliorer l'adaptation au sol de la herse rotative.

On connaît des herses rotatives dont le châssis est constitué de deux parties rigides ou mobiles l'une par rapport à l'autre (voir le document DE-U-94 05 585). Les contraintes de fabrication et de montage de telles herses rotatives font qu'il subsiste une bande de terre non ou mal travaillée entre les deux parties de châssis. En effet, l'assemblage de ces deux parties de châssis ne permet pas systématiquement aux deux rotors porte-outils adjacents et montés chacun sur une partie de châssis différente, d'être suffisamment rapprochés pour que la bande de terre localisée sous la zone de séparation des deux parties de châssis soit correctement travaillée. Il en résulte souvent un lit de semence non-homogène.

Il a été proposé de fixer sur un cadre supportant des parties de châssis, une dent fixe s'étendant à l'avant de la herse rotative et alignée avec la zone de séparation desdites parties de châssis. L'utilisation d'une dent fixe complémentaire suppose qu'un moyen de fixation approprié soit aménagé sur le cadre, ce qui augmente le nombre de pièces et/ou d'opérations nécessaires au montage d'une telle herse rotative. Une telle dent fixe est par ailleurs une pièce d'usure complémentaire destinée à être remplacée. De telles herses rotatives présentent donc des inconvénients manifestes.

L'objet de la présente invention vise à remédier aux inconvénients de l'état de la technique et à réaliser une herse rotative dont le châssis, en plusieurs parties, permet d'obtenir un lit de semence homogène et ce sans augmenter le prix de revient et d'entretien de ladite herse rotative.

L'objet assigné à la présente invention est atteint à l'aide d'une herse rotative comportant un cadre destiné à être accroché à un tracteur, au moins deux parties de châssis reliées audit cadre et supportant des rotors porte-outils, lesdites parties de châssis s'étendant transversalement et sensiblement horizontalement par rapport à la direction d'avance pendant le travail, caractérisée en ce que les rotors porte-outils situés à des extrémités adjacentes de parties de châssis distinctes sont adaptés pour tourner selon le même sens de rotation.

D'autres caractéristiques et avantages de l'invention ressortiront de la description détaillée figurant ci-après en référence aux dessins annexés, donnés à titre d'exemples non limitatifs, dans lesquels :
- la **figure 1** représente une vue globale de dessus d'une herse rotative en deux parties conforme à l'invention, notamment associée à un semoir,
- la **figure 2** représente un agrandissement de la zone de séparation du châssis en deux parties d'une herse rotative conforme à l'invention,
- la **figure 3** représente une vue de devant d'une herse rotative conforme à l'invention.

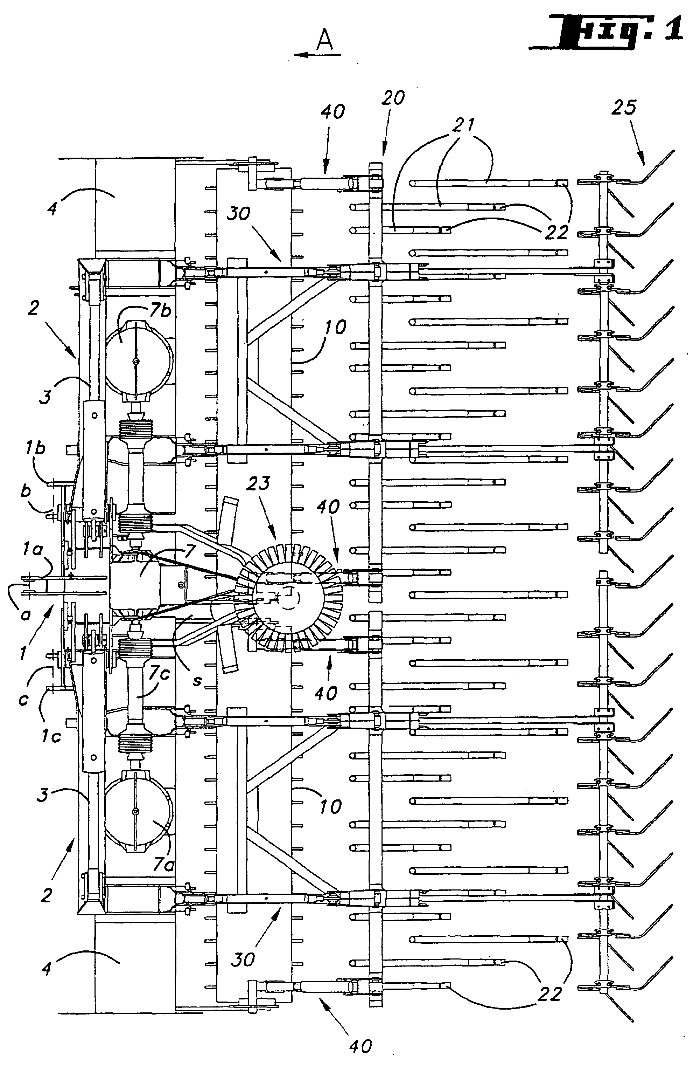

La figure 1 montre un exemple de réalisation et d'utilisation d'une herse rotative conforme à l'invention. La herse rotative comporte un cadre (1) pourvu d'un système d'attelage trois points (a-b-c) qui permet d'accrocher ladite herse rotative au relevage d'un tracteur non représenté. Des chapes (1a, 1b, 1c) ou autres dispositifs d'attelage peuvent être prévus. Dans la suite, la herse rotative conforme à l'invention est combinée à un semoir pneumatique. Par ailleurs, la herse rotative de la figure 1 est une herse repliable en deux parties. La présente invention ne se limite pas cependant à ce mode particulier de réalisation. Une herse rotative, non repliable et/ou rigide, ne sort pas du cadre de la présente invention. L'invention concerne donc également une herse rotative en deux parties montées de façon rigide ou flottante sur le cadre (1).

Le cadre (1) est relié, via des articulations d'axes dirigées selon le sens d'avance (A), à deux châssis (2). Ces deux parties de châssis (2) sont, par exemple, repliables vers le haut pour le transport sur route, et la position repliée est obtenue à l'aide de vérins hydrauliques de repliage (3) articulés chacun entre le cadre (1) et le châssis (2) correspondant. Chaque partie de châssis (2) est donc repliable sensiblement verticalement pour le transport.

Chaque châssis (2) comporte par exemple une poutre (4) supportant des organes de travail.

Chaque châssis (2) est également associé à un organe de référence (10) respectif du type rouleau de rappuyage et à une barre de semis (20). Cette dernière est reliée au châssis (2) correspondant à l'aide d'une structure de liaison (30). Des dispositifs d'appui (40), permettant de positionner chaque barre de semis (20) en hauteur par rapport à l'organe de référence (10) correspondant, sont aussi prévus. L'organe de référence (10) est articulé sur le châssis (2) correspondant avec tous moyens connus. La barre de semis (20) comprend avantageusement des conduits (21) reliant des socs (22) de semis à une tête de distribution (23) d'un semoir pneumatique. La barre de semis (20) est avantageusement associée à une herse de recouvrement (25) fixée ou articulée sur ladite barre de semis (20).

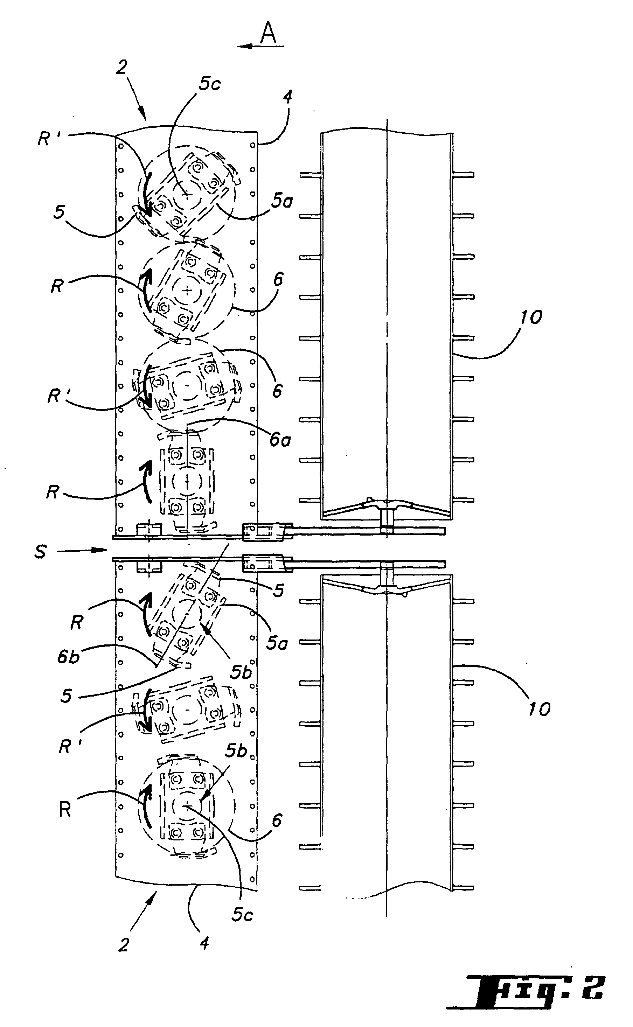

La figure 2 représente un détail de la figure 1 en vue de dessus. La herse rotative conforme à l'invention n'est que partiellement représentée. Les organes de travail montés sous chaque poutre (4) sont constitués de dents (5) et d'un support (5a) correspondant. Ce dernier est monté sur un rotor porte-outils (5b) correspondant. Les rotors porte-outils (5b) tournent autour d'axes verticaux (5c). Avantageusement chaque partie de châssis (2) comprend une poutre (4) correspondante dans laquelle sont logés des moyens d'entraînement pour les rotors porte-outils (5b) correspondants. Les deux poutres (4) sont positionnées au travail selon une direction sensiblement transversale à la direction d'avance (A). Il subsiste alors une zone de séparation (S) qui n'est pas travaillée par les dents (5) des deux rotors porte-outils (5b) adjacents de chaque châssis (2), c'est-à-dire les rotors porte-outils (5b) localisés de part et d'autre de la zone de séparation (S). Les rotors porte-outils (5b) de chaque poutre (4) présentent des zones de balayage (6) sensiblement jointives, et tournent dans un sens de rotation (R, R') opposé lorsque l'on passe d'un rotor porte-outils (5b) à son voisin immédiat. On obtient ainsi une bande de terre homogène sur toute la largeur de la poutre (4). Les zones de balayage (6) peuvent également se recouvrir partiellement.

Les rotors porte-outils (5b) situés aux extrémités adjacentes de chaque poutre (4) présentent cependant des zones de balayage (6) non jointives du fait de l'existence de la zone de séparation (S). Selon l'invention, il est alors intéressant de réaliser la herse rotative de façon à donner un sens de rotation (R) particulier aux rotors porte-outils (5b) adjacents et situés de part et d'autre de la zone de séparation (S).

En effet, la herse rotative conforme à l'invention est assemblée de manière à ce que les rotors porte-outils (5b) adjacents de poutres (4) distinctes, tournent dans le même sens de rotation (R). On obtient ainsi, contre toute attente, une terre correctement travaillée dans la zone de séparation (S) et ce même en l'absence de recouvrement ou de contact des zones de balayage (6) des dents (5) correspondantes. Le même sens de rotation (R) pour deux rotors porte-outils adjacents, situé à l'extrémité de poutres (4) distinctes, génère lors du travail des projections de terre créant des flux de terre opposés dans la zone de séparation (S). Il en résulte des chocs et des frictions supplémentaires entre les mottes et les particules de terre, ce qui a pour effet de favoriser l'éclatement desdites mottes. Ceci permet donc de compenser l'absence de recouvrement des zones de balayage (6) correspondantes.

Avantageusement, les rotors porte-outils (5b), situés de part et d'autre de la zone de séparation (S), présentent des supports (5a) orientés selon des directions différentes matérialisées par des axes (6a, 6b). Ces derniers représentent les directions de montage des dents (5). Selon un exemple de réalisation de la herse rotative conforme à l'invention, les axes (6a) et (6b) présentent une inclinaison comprise entre 5° et 90°.

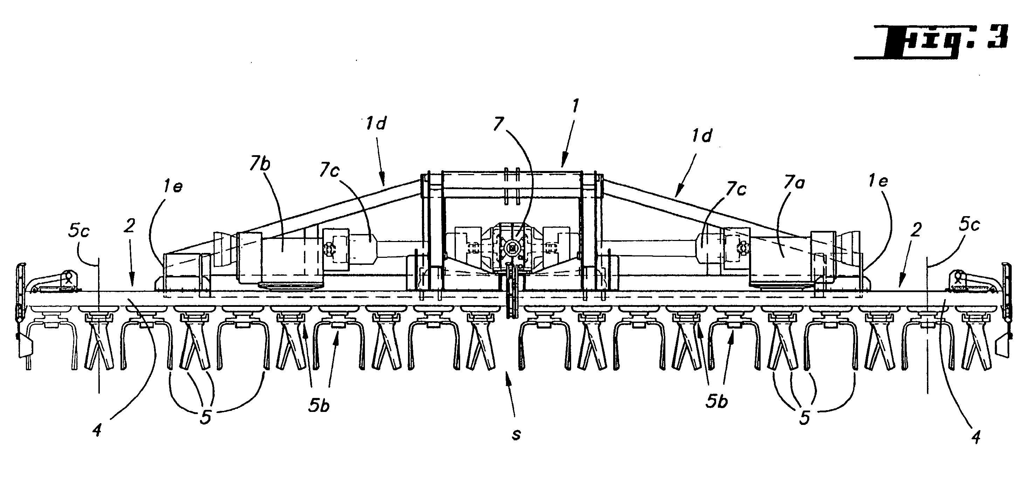

La figure 3 représente un autre exemple de réalisation d'une herse rotative conforme à l'invention. Le châssis (2) est constitué notamment de deux parties assemblées de façon rigide. Le cadre (1) permet à l'aide de longerons (1d) et de poutrelles (1e) de rigidifier l'ensemble de la herse rotative et notamment les poutres (4). Un carter central (7) monté sur le cadre (1) est destiné à être relié à la prise de force du tracteur. Le carter central (7) transmet le mouvement de rotation aux rotors porte-outils (5b) par l'intermédiaire de carters latéraux (7a, 7b) qui sont montés sur le châssis (2) correspondant. Des arbres de transmission (7c) relient le carter central (7) aux carters latéraux (7a, 7b). Ces derniers sont positionnés sur le châssis (2) correspondant pour obtenir le sens de rotation (R) souhaité. Sur la figure (3), les carters latéraux (7a, 7b) sont montés directement sur les poutres (4) correspondantes. Ces dernières sont de préférence creuses. Ainsi, des moyens d'entraînement (non représentés) pour les rotors porte-outils (5b) peuvent y être logés. Ces moyens d'entraînement sont connus en soi.

Selon un exemple complémentaire de réalisation de la herse rotative conforme à l'invention, mais non représentée aux figures, le châssis (2) présente trois poutres (4), à savoir une poutre (4) centrale et deux poutres (4) latérales. Ces dernières sont articulées de part et d'autre de la poutre (4) centrale selon des axes d'articulation dirigés sensiblement suivant la direction d'avance (A). Les poutres (4) latérales peuvent avantageusement être repliées vers le haut pour le transport.

La herse rotative conforme à l'invention comporte, par exemple, un nombre impair de rotors porte-outils (5b). Dans ce cas de figure, les deux parties de châssis (2) présentent des dimensions différentes et la zone de séparation (S) ne se situe pas au centre de ladite herse rotative.

Selon un autre exemple de réalisation de la herse rotative conforme à l'invention, le nombre de rotors porte-outils (5b) peut être pair. Le châssis (2) peut alors être réalisé par exemple en deux parties symétriques de même longueur.

Un châssis (2) en deux parties de longueurs différentes, c'est-à-dire non symétriques par rapport au centre de la herse rotative, et ce avec un nombre pair de rotors porte-outils (5b), ne sort pas du cadre de la présente invention.

Il est également possible de combiner des caractéristiques de divers exemples de réalisation pour constituer une herse rotative conforme à l'invention.

## Revendications

1. Herse rotative comportant un cadre (1) destiné à être accroché à un tracteur, au moins deux parties de châssis (2) reliées audit cadre (1) et supportant des rotors porte-outils (5b), lesdites parties de châssis (2) s'étendant transversalement et sensiblement horizontalement par rapport à la direction d'avance (A) pendant le travail, ***caractérisée en ce* que** les rotors porte-outils (5b) situés à des extrémités adjacentes de parties de châssis (2) distinctes sont adaptés pour tourner selon le même sens de rotation (R).

2. Herse rotative selon la revendication 1, ***caractérisée en ce* que** les parties de châssis (2) sont montées flottantes sur le cadre (1).

3. Herse rotative selon la revendication 1, ***caractérisée en ce* que** les parties de châssis (2) sont montées de façon rigide sur le cadre (1).

4. Herse rotative selon l'une quelconque des revendications 1 à 3, ***caractérisée en ce* que** chaque partie de châssis (2) comprend une poutre (4) correspondante dans laquelle sont logés des moyens d'entraînement pour les rotors porte-outils (5b) correspondants.

5. Herse rotative selon l'une quelconque des revendications 1 à 4, ***caractérisée en ce* qu'**elle comporte un nombre pair de rotors porte-outils (5b).

6. Herse rotative selon l'une quelconque des revendications 1 à 4, ***caractérisée en ce* qu'**elle comporte un nombre impair de rotors porte-outils (5b).

7. Herse rotative selon l'une quelconque des revendications 1 à 6, ***caractérisée en ce* qu'**elle comporte deux parties de châssis (2) repliables sensiblement verticalement pour le transport.

8. Herse rotative selon l'une quelconque des revendications 1 à 7, ***caractérisée en ce* qu'**elle est associée à au moins un organe de référence (10) du type rouleau de rappuyage.

9. Herse rotative selon l'une quelconque des revendications 1 à 8, ***caractérisée en ce* qu'**elle est associée à une barre de semis (20).

## Patentansprüche

1. Kreiselegge mit einem Rahmen (1), der an einen Schlepper angehängt werden soll und mindestens zwei mit dem Rahmen (1) verbundene Gestellteile (2), die Werkzeughalterrotoren (5b) tragen, wobei sich die Gestellteile (2) im Betrieb quer und im Wesentlichen horizontal zur Fahrtrichtung (A) erstrecken, ***dadurch gekennzeichnet,* dass** die sich an den benachbarten Enden der verschiedenen Gestellteile (2) befindenden Werkzeughalterrotoren (5b) so ausgeführt sind, dass sie sich in die gleiche Drehrichtung (R) drehen.

2. Kreiselegge nach Anspruch I, ***dadurch gekennzeichnet,* dass** die Gestellteile (2) beweglich am Rahmen (1) angebracht sind.

3. Kreiselegge nach Anspruch 1, ***dadurch gekennzeichnet,* dass** die Gestellteile (2) starr am Rahmen (1) angebracht sind.

4. Kreiselegge nach irgend einem der Ansprüche 1 bis 3, ***dadurch gekennzeichnet,* dass** jedes Gestellteil (2) einen entsprechenden Träger (4) aufweist, in dem Antriebsmittel für die entsprechenden Werkzeughalterrotoren (5b) untergebracht sind.

5. Kreiselegge nach irgend einem der Ansprüche 1 bis 4, ***dadurch gekennzeichnet,* dass** sie eine gerade Anzahl von Werkzeughalterrotoren (5b) aufweist.

6. Kreiselegge nach irgend einem der Ansprüche 1 bis 4, ***dadurch gekennzeichnet,* dass** sie eine ungerade Anzahl von Werkzeughalterrotoren (5b) aufweist.

7. Kreiselegge nach irgend einem der Ansprüche 1 bis 6, ***dadurch gekennzeichnet,* dass** sie zwei für den Transport im Wesentlichen vertikal zusammenklappbare Gestellteile (2) aufweist.

8. Kreiselegge nach irgend einem der Ansprüche 1 bis 7, ***dadurch gekennzeichnet,* dass** sie mindestens einem Bezugselement (10) der Presswalzenart zugeordnet ist.

9. Kreiselegge nach irgend einem der Ansprüche 1 bis 8, ***dadurch gekennzeichnet,* dass** sie einem Säbalken (20) zugeordnet ist.

## Claims

1. Rotary harrow comprising a frame (1) intended to be hitched to a tractor, at least two chassis portions (2) connected to the said frame (1) and supporting tool-carrier rotors (5b), the said chassis portions (2) extending transversely and substantially horizontally relative to the direction of travel (A) during work, ***characterized in* that** the tool-carrier rotors (5b) situated at adjacent ends of distinct chassis portions (2) are suitable for rotating in the same direction of rotation (R).

2. Rotary harrow according to Claim 1, ***characterized in* that** the chassis portions (2) are mounted floatingly on the frame (1).

3. Rotary harrow according to Claim 1, ***characterized in* that** the chassis portions (2) are mounted rigidly on the frame (1).

4. Rotary harrow according to any one of Claims 1 to 3, ***characterized in* that** each chassis portion (2) comprises a corresponding beam (4) in which are housed driving means for the corresponding tool-carrier rotors (5b).

5. Rotary harrow according to any one of Claims 1 to 4, ***characterized in* that** it comprises an even number of tool-carrier rotors (5b).

6. Rotary harrow according to any one of Claims 1 to 4, ***characterized in* that** it comprises an odd number of tool-carrier rotors (5b).

7. Rotary harrow according to any one of Claims 1 to 6, ***characterized in* that** it comprises two chassis portions (2) that can be folded substantially vertically for transport.

8. Rotary harrow according to any one of Claims 1 to 7, ***characterized in* that** it is associated with at least one reference member (10) of the packing roller type.

9. Rotary harrow according to any one of Claims 1 to 8, ***characterized in* that** it is associated with a sowing bar (20).
